# EUROPEAN PATENT SPECIFICATION

(11) **EP 3 791 680 B1**
(45) Date of publication and mention of the grant of the patent: **07.10.2026**
(21) Application number: 19799915.4
(22) Date of filing: 12.04.2019
(51) Int. Cl.: H04B 7/06, H04B 7/08, H04W 76/18, H04W 24/02, H04W 74/04, H04W 74/08, H04B 7/022, H04W 76/19, H04W 76/15, H04W 74/0838

(54) **SECONDARY CELL BEAM RECOVERY**
STRAHLWIEDERHERSTELLUNG FÜR SEKUNDÄRZELLE
RÉCUPÉRATION DE FAISCEAU DE CELLULE SECONDAIRE

(30) Priority: 10.05.2018 US 201862669719 P
(43) Date of publication of application: 17.03.2021
(60) Divisional application: 22206698.7 / 4 152 885; 22206703.5 / 4 171 165
(73) Proprietor: Nokia Technologies Oy, 02610 Espoo (FI)
(72) Inventor: KOSKELA, Timo, 90120 Oulu (FI); TURTINEN, Samuli, 91100 Ii (FI); KAIKKONEN, Jorma, 90800 Oulu (FI); ENESCU, Mihai, 02120 Espoo (FI); HAKOLA, Sami, 90450 Kempele (FI); KARJALAINEN, Juha, 90540 Oulu (FI)
(74) Representative: Page White Farrer
(86) International application number: PCT/FI2019/050295
(87) International publication number: WO 2019/215381

(56) References cited:
- WO-A1-2019/193239
- LENOVO ET AL: "Discussion of beam failure recovery for carrier aggregation", vol. RAN WG1, no. Sanya, China; 20180416 - 20180420, 15 April 2018 (2018-04-15), XP051426499, Retrieved from the Internet <URL:http://www.3gpp.org/ftp/Meetings%5F3GPP%5FSYNC/RAN1/Docs/> [retrieved on 20180415]
- MEDIATEK INC: "Summary 2 on Remaing issues on Beam Failure Recovery", vol. RAN WG1, no. Sanya, China; 20180416 - 20180420, 19 April 2018 (2018-04-19), XP051427814, Retrieved from the Internet <URL:http://www.3gpp.org/ftp/Meetings%5F3GPP%5FSYNC/RAN1/Docs/> [retrieved on 20180419]
- QUALCOMM: "Beam failure recovery procedure", vol. RAN WG1, no. Sanya, China; 20180416 - 20180420, 15 April 2018 (2018-04-15), XP051427055, Retrieved from the Internet <URL:http://www.3gpp.org/ftp/Meetings%5F3GPP%5FSYNC/RAN1/Docs/> [retrieved on 20180415]
- NOKIA ET AL: "SCell Beam Failure Recovery", vol. RAN WG2, no. Sanya, China; 20180416 - 20180420, 14 April 2018 (2018-04-14), XP051429013, Retrieved from the Internet <URL:http://www.3gpp.org/ftp/Meetings%5F3GPP%5FSYNC/RAN2/Docs/> [retrieved on 20180414]
- CATT AT&T CMCC NTT DOCOMO VERIZON SHARP HUAWEI HISILICON SAMSUNG QUALCOMM VIVO [VODAFONE: "WF on Beam Failure Recovery in CA", 28 February 2018 (2018-02-28), XP051398536, Retrieved from the Internet <URL:http://www.3gpp.org/ftp/tsg%5Fran/WG1%5FRL1/TSGR1%5F92/Docs/> [retrieved on 20180228]
- HUAWEI ET AL: "Discussions on RA for SCells BFR", vol. RAN WG2, no. Sanya, China; 20180416 - 20180420, 14 April 2018 (2018-04-14), XP051429518, Retrieved from the Internet <URL:http://www.3gpp.org/ftp/Meetings%5F3GPP%5FSYNC/RAN2/Docs/> [retrieved on 20180414]
- LG ELECTRONICS INC: "MAC and PHY operation for beam failure recovery request", vol. RAN WG2, no. Vancouver, Canada; 20180122 - 20180126, 12 January 2018 (2018-01-12), XP051386881, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- "R1-1803441 Summary 2 on Remaing issues on Beam Failure Recovery", 3GPP TSG RAN WG1 MEETING #92 R1-1803441, 1 March 2018 (2018-03-01), Athens, Greece, XP051398655, Retrieved from the Internet <URL:https://www.3gpp.org/ftp/tsg_ran/WG1_RL1/TSGR1_92/Docs/R1-1803441.zip> [retrieved on 20190605]
- LENOVO ET AL.: "R1-1804211 Discussion of beam failure recovery for carrier aggregation", 3GPP TSG RAN WG1 MEETING #92, 6 April 2018 (2018-04-06), Sanya, China, XP051413160, Retrieved from the Internet <URL:https://www.3gpp.org/ftp/tsg_ran/WG1_RL1/TSGR1_92b/Docs/R1-1804211.zip> [retrieved on 20190605]
- VIVO: "R2-1804696 3GPP TSG-RAN WG2 Meeting #101 bis", R2-1804696 3GPP TSG-RAN WG2 MEETING #101 BIS, 5 April 2018 (2018-04-05), Sanya, China, XP051414849, Retrieved from the Internet <URL:https://www.3gpp.org/ftp/tsg_ran/WG2_RL2/TSGR2_101bis/Docs/R2-1804696.zip> [retrieved on 20190605]
- SAMSUNG: "R1-1804359 Corrections on Beam Failure Recovery", 3GPP TSG RAN WG1 MEETING #92BIS, 6 April 2018 (2018-04-06), Sanya, China, XP051413245, Retrieved from the Internet <URL:https://www.3gpp.org/ftp/tsg_ran/WG1_RL1/TSGR1_92b/Docs/R1-1804359.zip> [retrieved on 20190605]
- SAMSUNG: "R1 -1803554 CR to 38.213 capturing the NR ad-hoc 1801 and RAN1#92 meeting agreements", 3GPP TSG-RAN1 MEETING #92, 15 March 2018 (2018-03-15), Athens, Greece, XP051410840, Retrieved from the Internet <URL:https://www.3gpp.org/ftp/tsg_ran/WG1_RL1/TSGR1_92/Docs/R1-1803554.zip> [retrieved on 20190605]

## Description

### CROSS REFERENCE TO RELATED APPLICATION:

This application claims the benefit of U.S. Provisional Application No. 62/669,719, filed May 10, 2018.

### BACKGROUND:

### Field:

Certain embodiments may relate to wireless communication systems. For example, some embodiments may relate to beamforming techniques for secondary cells.

### Description of the Related Art:

A random access channel (RACH) procedure, such as contention-free random access (CFRA) or contention-based random access (CBRA), may be initiated by a user equipment (UE) for beam failure recovery techniques on a primary cell. Beam failure recovery techniques, also referred to as link reconfiguration, may recover a lost link connection. For example, beam failure recovery procedures may detect when one or more serving control channel (PDCCH) links are in failure conditions and require recovery. To recover the failed PDCCH links, UE may transmit signals to the network to indicate link failure and potential link replacements.

However, challenges arise in beam failure recovery techniques that involve reference signals across carriers where a primary cell and one or more secondary cells operate with different beam failure detection reference signals. Lenovo et al, "Discussion of beam failure recovery for carrier aggregation", 3GPP draft; R1-1804211_BFR discusses various issues and potential solution for beam failure recovery in the CA case.

### SUMMARY:

In accordance with some embodiments, a method includes determining, by a user equipment, that a secondary cell beam failure has been determined by a medium access control layer. The method further includes determining, by the user equipment, one or more other secondary cell candidates based on at least candidate beam measurements of a primary cell. The method further includes determining that no candidate beams are available on the secondary cell and that a primary cell is not in a failure condition.

The method further includes transmitting, by the user equipment, one or more indications of one or more selected other secondary cell candidates.

In accordance with some embodiments, an apparatus includes means for determining that a secondary cell beam failure has been determined by a medium access control layer. The apparatus further includes means for determining one or more other secondary cell candidates based on at least candidate beam measurements of a primary cell. The apparatus further includes means for determining that no candidate beams are available on the secondary cell and that a primary cell is not in a failure condition. The apparatus further includes means for transmitting one or more indications of one or more selected other secondary cell candidates.

The invention is defined by the appended claims.

### BRIEF DESCRIPTION OF THE DRAWINGS:

For proper understanding of this disclosure, reference should be made to the accompanying drawings, wherein:
Figure 1 illustrates an example of a system according to certain embodiments.
Figure 2 illustrates an example of a method performed by user equipment according to certain embodiments.
Figure 3 illustrates an example of a method performed by a network entity according to certain embodiments.
Figure 4 illustrates an example of a method for link reconfiguration performed by a user equipment according to certain embodiments.
Figure 5 illustrates an example of a system according to certain embodiments.

### DETAILED DESCRIPTION:

The features, structures, or characteristics of certain embodiments described throughout this specification may be combined in any suitable manner in one or more embodiments. For example, the usage of the phrases "certain embodiments," "some embodiments," "other embodiments," or other similar language throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

Certain embodiments contained herein may provide significant technical advantages. For example, certain embodiments may avoid a panel activity delay in the event the network indicates an assumed candidate as a new Transmission Configuration Indication (TCI) state. In addition, secondary cell signaling may be used to send a Medium Access Control (MAC) Control Element (CE), which confirms that the link is operational, and that the MAC CE needs to be acknowledged using the primary cell.

In case the network decides to activate a PDCCH TCI state of which the user equipment is not currently aligned, such as where the alignment does not correspond to the new TCI state indicated by the network, the network may use a primary cell downlink to signal the new TCI state to the user equipment.

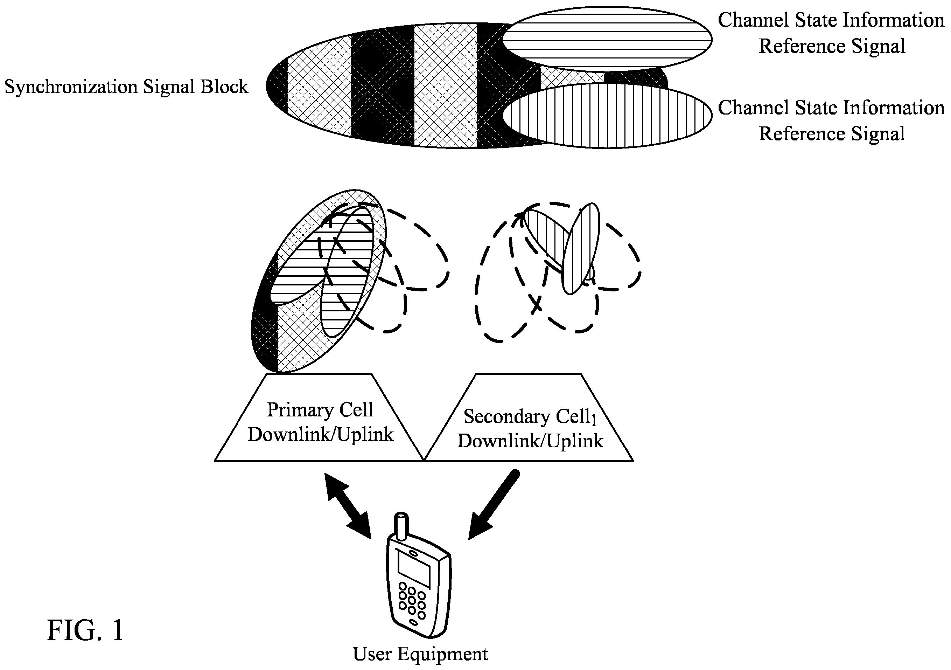

For example, Figure 1 illustrates an example of a secondary cell without a synchronization signal block in a failure condition based on CSI-RS, and the UE cannot indicate any new Channel State Information Reference Signal (CSI-RS) candidates on the secondary cell. Since the secondary cell does not have a synchronization signal block, the user equipment cannot assume a fallback candidate with a periodic signal specific to a secondary cell to be transmitted. In this example, the primary cell, master cell group, or primary secondary cell of the secondary cell group in context of dual connectivity, is assumed to still be available for secondary recovery procedures. In such a communication system, base stations, such as an evolved Node B (eNB), next generation node (gNB) or other network entity, may be responsible for communicating with user equipment.

When primary cells and secondary cells are operating on the same frequency and band, it is possible in new radio (NR) technology to configure carrier aggregation where the synchronization signal block is not transmitted in the secondary cell. Synchronization Signal Blocks (SSBs) and Synchronization Signal/Physical Broadcast Channel (SS/PBCH) Blocks comprise PSS and SSS signals, and Physical Broadcast Channels include PBCH and DMRS. In addition, SSB may carry cell identity (PCI, Physical Cell ID), and specific SSB of a cell can be identified based on the SSB index or SSB resource index or SSB time location index. The CSI-RS configuration for beam management of the primary cell and secondary cell may be performed using the primary cell synchronization signal block for spatial and/or other types of QCL references across the component carriers, where the synchronization signal blocks are not transmitted on the secondary cell. The CSI-RS may be configured for a UE carrier specifically where the PDCCH-TCI State configuration is carrier specific, leaving the network able to configure each cell/carrier, non-overlapping PDCCH-TCI State. This would result in beam failure detection resources, which may be referred to as a set of q₀, where the set may include SSB and/or CSI-RS resource indexes that do not overlap between cells, such as q_{0_PCell}!=q_{0_SCell}, where q_{0_Pcell} refers to PCell failure detection resources, q_{0_SCell} refers to SCell failure detection resources, and the implicit configuration of q₀ is based on the PDCCH beam indication. In a similar manner, with explicit q₀ configuration, the failure detection resources of PCell and SCell may not be the same, e.g., different PDCCH beams/TCI states are used for PCell and SCell. In some embodiments, the failure detection resources of two serving cells (refers to SCell or PCell) may not be the same. Thus, the primary cell failure does not automatically correspond to secondary cell failure.

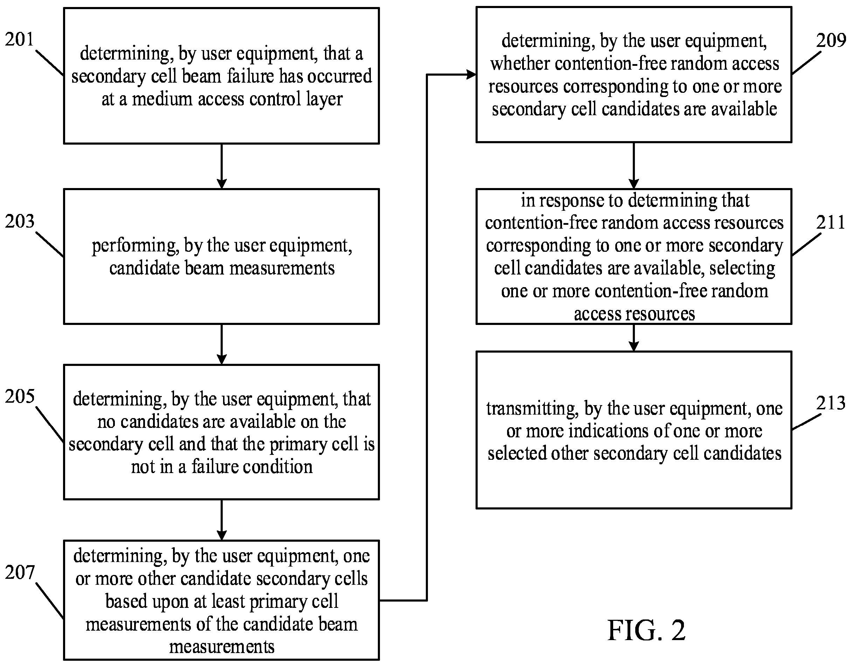

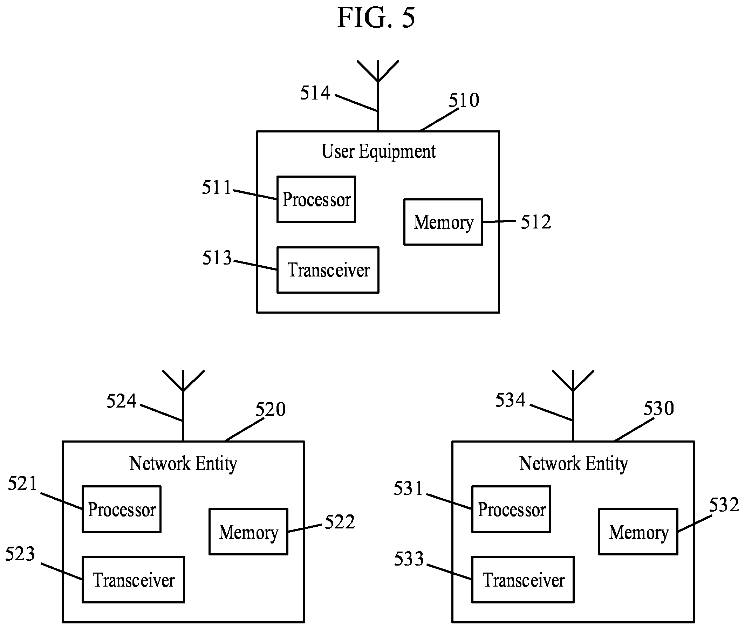

Figure 2 illustrates a method performed by user equipment, such as user equipment 510 in Figure 5. In step 201, the user equipment determines that a secondary cell beam failure has occurred at a medium access control layer (other layers are not excluded). In step 203, the user equipment may perform candidate beam measurements on the secondary cell downlink reference signals, for example, CSI-RS and SS/PBCH Block (beam specific measurements). Candidate beam measurements may include L1 measurements, such as RSRP, RSRQ, SINR, hypothetical PDCCH BLER, or other L1 measurements. In some embodiments, the physical layer of the user equipment may perform candidate beam measurements on secondary cell signals, such as SSB. In step 205, the user equipment determines that no candidates are available on the secondary cell and that the primary cell is not in a failure condition. In case the primary cell is in failure condition, the UE may prioritize the recovery of primary cell first. In step 207, the user equipment determines one or more other candidate beams of secondary cells based upon at least measurements of the candidate beam measurements on primary cell. In step 209, the user equipment may determine whether contention-free random access (CFRA) resources for beam failure recovery corresponding to one or more candidate beams of secondary cells are available. In step 211, in response to determining that contention-free random access resources corresponding to one or more secondary cell candidates are available, the user equipment may select one or more contention-free random access resources. In step 213, the user equipment transmits one or more indications of one or more selected other secondary cell candidate beams. These CFRA signal may be mapped to SCell uplink signaling resources or PCell signaling resources (or any serving cell uplink resources).

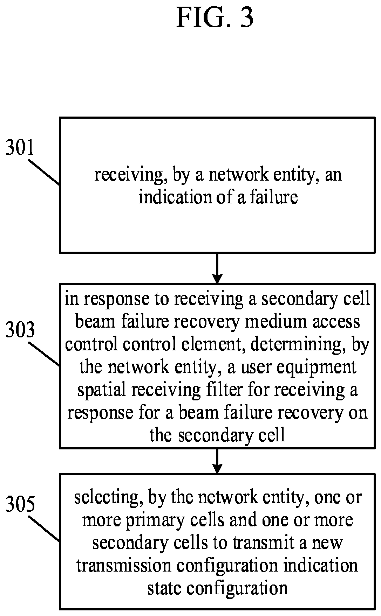

Figure 3 illustrates an example of a method performed by a network entity, such as network entity 520 and/or network entity 530 in Figure 5. In step 301, a network entity may receive an indication of a failure. In some embodiments, the indication of a failure may indicate a secondary cell beam failure. In other embodiments, the indication of a failure may include a medium access control control element indicating one or more new candidate resources of a failed secondary cell. In step 303, in response to receiving a secondary cell beam failure recovery medium access control control element, the network entity may determine a user equipment spatial receiving filter for receiving a response for a beam failure recovery on the secondary cell.

In step 305, the network entity may select one or more primary cells and one or more secondary cells to transmit a new transmission configuration indication state configuration (for PDCCH). In various embodiments, if a synchronization signal block index has been indicated by UE as a new candidate beam, the network entity may provide a channel state information reference signal configuration corresponding with the synchronization signal block. In this way, network may initiate the beam refinement based UE indicated SS Block candidate. Alternatively, UE may indicate CSI-RS and network may initiate beam refinement by configuring additional reference signals corresponding to more refined beams. Beam refinement refers to a procedure where UE is requested feedback on measurements on more refined or narrower beams (that have typically higher beamforming gain but have narrower spatial coverage). This may improve the quality of communication.

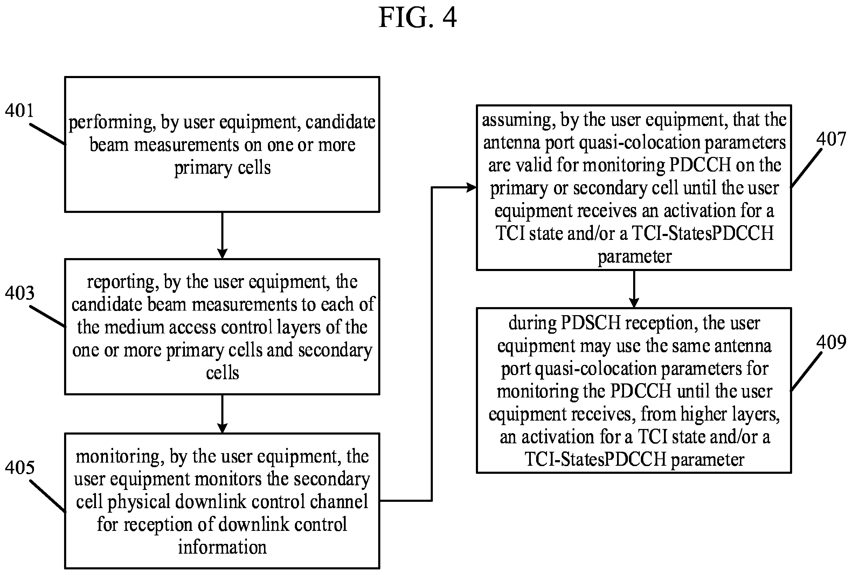

Figure 4 illustrates another example of a method performed by user equipment, such user equipment 510 in Figure 5. In some embodiments, the method described in Figure 4 may be performed in combination with the method described in Figure 2. In step 401, user equipment may perform candidate beam measurements on one or more primary cells, such as network entity 520, and/or secondary cells, such as network entity 530. In one example the MAC layer of user equipment may request PHY to perform such measurements on specific signal, or the measurements are provided by PHY without request, i.e. once the measurement results are obtained for specific signals, or UE provides measurements on signals it has detected.

In step 403, the user equipment may report to one or more or each of the serving cells (for example, PCell and/or one or more SCells) the measurements on one or more primary cells and/or secondary cells. In some embodiments, the reporting may include one or more channel state information reference signal resource indexes, one or more synchronization signal/physical broadcast channel resource indexes, and one or more corresponding reference signal received power measurements, such as L1-RSRP or RSRP). Measurements may also be provided using MAC control elements or RRC signaling. Measurement quantity measurements may include RSRP, RSRQ, hypothetical PDCCH BLER, SINR, or the like.

In some embodiments, if the user equipment determines that no secondary cell candidate signals are available, such as when indicated using CFRA signaling or using MAC CE, the user equipment may provide one or more measurements of primary cell reference signals that have cross-carrier quasi co-location assumption associated with a failed secondary cell. A quasi co-location may be a spatial RX assumption, such as when the UE determines signals with spatial RX assumption for SCell (or any serving cell based on another serving cell) to be received with same RX beam as in PCell. Other types of QCL are not excluded. When signals share the same QCL assumption between each other, it means they share the same indicted property such as delay spread, Doppler spread, Doppler shift, average delay, and/or spatial reception parameters. As an example, when signals have the spatial RX QCL assumption, it would mean that UE can assume a same RX beam (RX spatial filter configuration) when receiving the signals. Determining spatial RX filter configuration may be based on the indicated resource for beam failure recovery request and/or based on the selected resource indication by higher layer (i.e. MAC indicates PHY layer which resource was selected).

In some embodiments, a SCell beam failure may be detected based upon one or more CSI-RS configured as BFD-RS. Such failures may be detected where a PCell and/or a SCell with a working uplink connection associated with the failed SCell are not in a failure condition, and no suitable CSI-RS candidate beams exist (i.e. cannot be detected) on the SCell. The UE may detect a SCell beam failure based on CSI-RS in a set of q₀ SCell, and the UE cannot explicitly indicate any new candidate beams using CSI-RS measurements on the SCell. In response, the UE may assume spatial QCL for the PCell SSB and/or CSI-RS signals of one or more SCells, and determine one or more SCell candidates using one or more techniques, as discussed below.

For example, if an SSB (SS/PBCH Block) that is currently configured as an active TCI-State for PDCCH for the PCell is determined to have a cross carrier spatial QCL with the failed SCell, the UE may select and indicate the SSB as a candidate. If multiple SSBs are configured as TCI States for PDCCH UE may select an SSB with highest signal quality based on measurements.

In another example, if a cross carrier spatial QCL is determined for the CSI-RS that is configured as an active TCI-State for PDCCH for the PCell, the UE may select the corresponding SSB as a new candidate based upon the QCL determination. In this example, the SSB may be configured as a source QCL reference for CSI-RS, such as when they share the same indicated QCL parameter such as spatial RX.

Another sample scenario is where a cross carrier spatial QCL is assumed for an SSB that is configured as an active TCI-State for PDCCH for the PCell, and there is a spatial QCL associated with CSI-RS resources in the PCell. In this example, the UE may select one or more combinations of available SSBs and CSI-RSs, where SSB/CSI-RS groups share the same spatial QCL assumption with a PCell according to aggregated L1-RSRPs over QCL SSB and CSI-RB resources within a group. An aggregated L1-RSRP may be comprised of RSRP measurements of both SSB and CSI-RS of the same group.

Furthermore, if a cross carrier spatial QCL is assumed for a CSI-RS that is currently configured as an active TCI-StatesPDCCH for the PCell, the UE may select the corresponding SS block as the new candidate through QCL assumption.

Finally, if a beam failure is detected on a SCell, and cross carrier spatial QCL is assumed for a PCell SS block (or serving cell with uplink for beam failure recovery signaling), and the SS block or SS Blocks corresponding to the failed CSI-RS beams is above one or more thresholds, such as TH1, the SS block or SS Blocks may be selected as the new candidate and indicated to network. In some embodiments, the threshold may be static, or may depend on the particular SS block configured as an active TCI-StatesPDCCH or through QCL. This threshold, as an example, may be configured by network. TH1 may also be a candidate beam threshold configured for CFRA BFR, or it may be a TH configured in RACH procedure for selection of suitable SS Blocks for random access. Other thresholds are not excluded. Multiple SSBs may be indicated to network and for the spatial RX assumption for the failed SCell (UE configures RX spatial filter for the SCell according the RX assumption of the SSB on PCell) UE may select the best reported SSB. In case only one SSB is indicated as candidate, that is selected. In similar manner above methods can be applied for CSI-RS signals.

Finally, if a beam failure is detected on a SCell, cross carrier spatial QCL is assume for the SS block, and the SS block corresponding to the failed CSI-RS beams are above one or more thresholds, such as TH1, the SS block may be selected as the new candidate. In some embodiments, the threshold may be static, or may depend on the signal level of particular SS block configured as an active TCI-StatesPDCCH or through QCL. Threshold may thus be relative to specific SSB (where the relative offset may be configured by network e.g, X dB/mW compared to the specific SSB signal level) or a network configured absolute value.

In some embodiments, the UE reception spatial filter may be configured to assume the PDCCH DMRS of the SCell is spatially quasi co-located with the selected PCell SS block, CSI-RS, and/or SS block of the indicated CSI-RS through the spatial QCL assumption.

In step 405, in response to the user equipment indicating one or more channel state information reference signal resources and/or synchronization signal/physical broadcast channel block indexes from a primary cell, the user equipment monitors the secondary cell physical downlink control channel for reception of downlink control information. The downlink control information may be transmitted using UE specific identifier for the secondary cell (e.g. cyclic redundancy check scrambled by radio network temporary identifier). UE may start monitoring the network response to the indication of candidates (e.g. beginning from the next slot after transmission of an indication or N slots or after next PDCCH monitoring occasion after the indication of recovery request or the response monitoring may take into account NW configured delay. In one example, this delay may be an antenna panel activation delay i.e. after indication UE requires K- millisecond before it is able to receive on SCell. Based on the selected and indicated reference signal (a candidate beam), the UE may assume that for the SCell, the demodulation reference signal antenna port is associated with the PDCCH reception in a UE-specific search space if quasi co-located with a selected periodic channel state information reference signal resource or synchronization signal/physical broadcast channel block index regarding one or more of delay spread, Doppler spread, Doppler shift, average delay, and/or spatial reception parameters. In some embodiments, signals which share the same QCL assumption between each other may share one or more properties, such as delay spread, Doppler spread, Doppler shift, average delay, and/or spatial reception parameters.

In some embodiments, before the user equipment indicates one or more channel state information reference signals or SS blocks to network as new candidate beam upon the failure of SCell, the user equipment may monitor the PDCCH with quasi co-location assumptions prior to the beam failure.

In step 407, the user equipment assumes that the antenna port quasi-colocation parameters are valid for monitoring PDCCH on the primary or secondary cell until the user equipment receives an activation for a TCI state and/or a TCI-States for PDCCH parameter. In step 409, during PDSCH reception, the user equipment may use the same antenna port quasi-colocation parameters for monitoring the PDCCH until the user equipment receives, from higher layers, an activation for a TCI state and/or a TCI-States for PDCCH parameter.

In one embodiment, one or more contention free preambles for one or more secondary cells may be reserved on a primary cell or secondary cell uplink. A serving cell uplink where a serving cell may be another PCell in dual connectivity, referred to as SpCell). This may be referred to a physical random access channel of preamble resources (set of PRACH resources). The reserved preambles may be mapped to a synchronization signal block/CSI-RS that have cross carrier spatial Quasi Co-Location (QCL) assumptions for the failed secondary cell. In some embodiments, signals which share the same QCL assumption between each other may share one or more properties, such as delay spread, Doppler spread, Doppler shift, average delay, and/or spatial reception parameters.

In one embodiment, UE may be configured with CFRA (contention free random access) signals just to indicate failure of SCell. In this case the indicated failure may implicitly mean that UE assumes for SCell candidate the current TCI State for PDCCH (either SSB or CSI-RS or SSB through QCL assumption with CSI-RS). If the UE has only one TCI state for PDCCH, the candidate (for spatial QCL assumption for receiving on SCell) is implicitly the said TCI state. In cases of multiple TCI states for PDCCH, the CFRA signal may be TCI state specific. Furthermore, when a UE assumes the same spatial QCL assumption for a signal across one or more component carriers or bandwidth parts, the UE may use the same spatial filter to receive the signal on each of the component carriers where QCL assumption holds. Similarly, if two signals, such as CSI-RSs, share a spatial RX QCL assumption, the UE may assume the same spatial receive filter, such as a RX beam, for the reception of both signals. In addition, the UE may determine one or more properties of one or more signals based upon other signals when the QCL is indicated, such as by Doppler spread. The mapping may be directly to the reference signal, or may be through the QCL assumption of currently configured CSI-RS for primary PDCCH-TCIState.

In another embodiment, the user equipment may use MAC CE to indicate that the secondary cell has failed, and that no candidate beams are available to be indicated on the secondary cell. In other embodiments, the user equipment may indicate, using SCell candidate beams, one or more primary cell synchronization signal blocks that are above a first threshold, and select the highest reported SSB (SSB resource index, or SSB time location index and potentially the respective signal quality measurement) as the candidate, setting the receiving spatial filter according to the highest reported SSB block RX direction. In some embodiments, the threshold TH1 may be a network configured candidate beam selection threshold, such as an SS/PBCH Block (SSB) signal quality, including RSRP, RSRQ, and SINR. In some embodiments, when the candidate beam selections are above the threshold, the UE may consider the SSB as a potential beam failure recovery candidate. With multiple candidates indicated by the user equipment using MAC CE signaling, the user equipment may assume, for the SCell PDCCH reception, the spatial filters according to the highest reported SSB index of primary cell SS Blocks i.e. same RX beam/spatial filter configuration that was used for receiving primary cell SSB, is used for receiving the PDCCH on SCell. Alternatively, the signal in the above mentioned embodiment may also be a CSI-RS signal. The user equipment may prioritize certain contention free recovery resources if a corresponding downlink reference signal is above a pre-defined threshold. However, if unavailable, the user equipment switches to a MAC CE based on the indication of the secondary cell failure and potentially new candidates. MAC CE can also be used in similar manner as above to indicate SCell candidates using measurements on PCell signals when the PCell signals have cross-carrier QCL assumption as described herein.

Figure 5 illustrates an example of a system according to certain embodiments. In one embodiment, a system may include multiple devices, such as, for example, user equipment 510, network entity 520, and network entity 530. Network entity 520 and network entity 530 may be a primary serving cell and/or a secondary serving cell, respectively.

Network entity 520 and network entity 530 may be one or more of a base station, such as an evolved node B (eNB) or next generation node B (gNB), a next generation radio access network (NG RAN), a serving gateway, a server, and/or any other access node or combination thereof. Furthermore, a citizens broadband radio service (CBRS) device (CBSD) may include one or more serving cells, such as network entity 520 and network entity 530. UE 510 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof.

One or more of these devices may include at least one processor, respectively indicated as 511, 521, and 531. At least one memory may be provided in one or more of devices indicated at 512, 522, and 532. The memory may be fixed or removable. The memory may include computer program instructions or computer code contained therein. Processors 511, 521, and 531 and memory 512, 522, and 532 or a subset thereof, may be configured to provide means corresponding to the various blocks of Figures 1-4. Although not shown, the devices may also include positioning hardware, such as global positioning system (GPS) or micro electrical mechanical system (MEMS) hardware, which may be used to determine a location of the device. Other sensors are also permitted and may be included to determine location, elevation, orientation, and so forth, such as barometers, compasses, and the like.

As shown in Figure 5, transceivers 513, 523, and 533 may be provided, and one or more devices may also include at least one antenna, respectively illustrated as 514, 524, and 534. The device may have many antennas, such as an array of antennas configured for multiple input multiple output (MIMO) communications, or multiple antennas for multiple radio access technologies. Other configurations of these devices, for example, may be provided.

Transceivers 513, 523, and 533 may be a transmitter, a receiver, or both a transmitter and a receiver, or a unit or device that may be configured both for transmission and reception.

Processors 511, 521, and 531 may be embodied by any computational or data processing device, such as a central processing unit (CPU), application specific integrated circuit (ASIC), or comparable device. The processors may be implemented as a single controller, or a plurality of controllers or processors.

Memory 512, 522, and 532 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory and which may be processed by the processors may be any suitable form of computer program code, for example, a compiled or interpreted computer program written in any suitable programming language. Memory may be removable or non-removable.

The memory and the computer program instructions may be configured, with the processor for the particular device, to cause a hardware apparatus such as user equipment to perform any of the processes described below (see, for example, Figures 1-4). Therefore, in certain embodiments, a non-transitory computer-readable medium may be encoded with computer instructions that, when executed in hardware, perform a process such as one of the processes described herein. Alternatively, certain embodiments may be performed entirely in hardware.

In certain embodiments, an apparatus may include circuitry configured to perform any of the processes or functions illustrated in Figures 1-4. For example, circuitry may be hardware-only circuit implementations, such as analog and/or digital circuitry. In another example, circuitry may be a combination of hardware circuits and software, such as a combination of analog and/or digital hardware circuit(s) with software or firmware, and/or any portions of hardware processor(s) with software (including digital signal processor(s)), software, and at least one memory that work together to cause an apparatus to perform various processes or functions. In yet another example, circuitry may be hardware circuit(s) and or processor(s), such as a microprocessor(s) or a portion of a microprocessor(s), that include software, such as firmware for operation. Software in circuitry may not be present when it is not needed for the operation of the hardware. One having ordinary skill in the art will readily understand that certain embodiments discussed above may be practiced with steps in a different order, and/or with hardware elements in configurations, which are different from those that are disclosed. Therefore, it would be apparent to those of skill in the art that certain modifications, variations, and alternative constructions would be apparent, while remaining within the scope of the invention. In order to determine the metes and bounds of the invention, therefore, reference should be made to the appended claims.

### Partial Glossary

- 3GPP: 3rd Generation Partnership Project
- BFD-RS: Beam Failure Detection Reference Signal
- BFR: Beam Failure Recovery
- BFRQ: Beam Failure Recovery Request
- BLER: Block Error Rate
- CBRA: Contention-Based Random Access
- CBRACH: Contention-Based Random Access Channel
- CE: Control Element
- CFRA: Contention Free Random Access
- CORESET: Control Resource Set
- CSI-RS: Channel State Information Reference Signal
- DCI: Downlink Control Information
- DMRS: Demodulation Reference Signal
- FR: Frequency Range
- gNB: 5G Node B
- MAC: Medium Access Control
- NR: New Radio
- PBCH: Physical Broadcast Channel
- PCell: Primary Cell
- PDCCH: Physical Downlink Control Channel
- PDSCH: Physical Downlink Shared Channel
- PRACH: Physical Random Access Channel
- QCL: Quasi Co-Location
- QoS: Quality of Service
- RNTI: Radio Network Temporary Identifier
- RRC: Radio Resource Control
- RSRP: Reference Signal Receive Power
- RSRQ: Reference Signal Receive Quality
- Rx: Reception
- SCell: Secondary Cell
- SINR: Signal-to-Interference-Plus-Noise Ratio
- SS: Synchronization Signal
- SSB: Synchronization Signal Block
- SpCell: Special Cell
- TCI: Transmission Configuration Indication
- TH1: First Threshold
- Tx: Transmission
- UE: User Equipment

## Claims

1. An apparatus (510) comprising
means for determining (201) that beam failure on a secondary cell has been determined by a medium access control layer;
means for determining (205) that no candidate beams are available on the secondary cell and that a primary cell is not in a failure condition;
means for determining (207) one or more other secondary cell candidates based on at least candidate beam measurements of at least one serving cell; and
means for transmitting (213) one or more indications of one or more determined other secondary cell candidates.

2. The apparatus according to claim 1, further comprising:
means for performing physical layer candidate beam measurements on the secondary cell.

3. The apparatus according to any of claims 1-2, wherein the transmitting one or more indications of one or more determined other secondary cell candidates comprises
using medium access control control element to indicate information on new secondary cell candidates, if new candidates can be indicated.

4. The apparatus according to claim 3, wherein the medium access control control element accommodates information on several candidate beams.

5. The apparatus according to any of claims 1-4, further comprising means for determining (209) whether contention-free random access resources corresponding to one or more secondary cell candidates are available before transmitting (213) one or more indications of one or more determined other secondary cell candidates.

6. The apparatus according to claim 5, further comprising means for selecting (211) one or more of the one or more contention-free random access resources.

7. A method comprising:
determining (201), by a user equipment, that beam failure on a secondary cell has been determined by a medium access control layer;
determining (205) that no candidate beams are available on the secondary cell and that a primary cell is not in a failure condition;
determining (207), by the user equipment, one or more other secondary cell candidates based on at least candidate beam measurements of at least one serving cell; and
transmitting (213), by the user equipment, one or more indications of one or more determined other secondary cell candidates.

## Patentansprüche

1. Vorrichtung (510), umfassend
Mittel zum Bestimmen (201), dass ein Strahlausfall an einer Sekundärzelle durch eine Medium-Access-Control-Schicht bestimmt worden ist;
Mittel zum Bestimmen (205), dass keine Kandidatenstrahlen an der Sekundärzelle verfügbar sind und dass sich eine Primärzelle nicht in einem Ausfallzustand befindet;
Mittel zum Bestimmen (207) eines oder mehrerer anderer Sekundärzell-Kandidaten basierend auf mindestens Kandidatenstrahl-Messungen mindestens einer Serving-Zelle; und
Mittel zum Übertragen (213) einer oder mehrerer Angaben eines oder mehrerer bestimmter anderer Sekundärzell-Kandidaten.

2. Vorrichtung nach Anspruch 1, ferner umfassend:
Mittel zum Durchführen von Kandidatenstrahl-Messungen der physikalischen Schicht an der Sekundärzelle.

3. Vorrichtung nach einem der Ansprüche 1 bis 2, wobei das Übertragen einer oder mehrerer Angaben eines oder mehrerer bestimmter anderer Sekundärzell-Kandidaten umfasst Verwenden eines Medium-Access-Control-Steuerelements, um Informationen über neue Sekundärzell-Kandidaten anzugeben, falls neue Kandidaten angegeben werden können.

4. Vorrichtung nach Anspruch 3, wobei das Medium-Access-Control-Steuerelement Informationen über mehrere Kandidatenstrahlen aufnimmt.

5. Vorrichtung nach einem der Ansprüche 1 bis 4, ferner umfassend Mittel zum Bestimmen (209), ob kontentionsfreie Zufallszugriffsressourcen, die einem oder mehreren Sekundärzell-Kandidaten entsprechen, verfügbar sind, bevor eine oder mehrere Angaben eines oder mehrerer bestimmter anderer Sekundärzell-Kandidaten übertragen (213) werden.

6. Vorrichtung nach Anspruch 5, ferner umfassend Mittel zum Auswählen (211) einer oder mehrerer der kontentionsfreien Zufallszugriffsressourcen.

7. Verfahren, umfassend:
Bestimmen (201), durch ein Benutzergerät, dass ein Strahlausfall an einer Sekundärzelle durch eine Medium-Access-Control-Schicht bestimmt worden ist;
Bestimmen (205), dass keine Kandidatenstrahlen an der Sekundärzelle verfügbar sind und dass sich eine Primärzelle nicht in einem Ausfallzustand befindet;
Bestimmen (207), durch das Benutzergerät, eines oder mehrerer anderer Sekundärzell-Kandidaten basierend auf mindestens Kandidatenstrahl-Messungen mindestens einer Serving-Zelle; und
Übertragen (213), durch das Benutzergerät, einer oder mehrerer Angaben eines oder mehrerer bestimmter anderer Sekundärzell-Kandidaten.

## Revendications

1. Appareil (510) comprenant
des moyens pour déterminer (201) qu'une défaillance de faisceau sur une cellule secondaire a été déterminée par une couche de contrôle d'accès au support ;
des moyens pour déterminer (205) qu'aucun faisceau candidat n'est disponible sur la cellule secondaire et qu'une cellule primaire n'est pas dans un état de défaillance ;
des moyens pour déterminer (207) un ou plusieurs autres candidats de cellule secondaire sur la base d'au moins des mesures de faisceaux candidats d'au moins une cellule desservante ; et
des moyens pour transmettre (213) une ou plusieurs indications d'un ou de plusieurs autres candidats de cellule secondaire déterminés.

2. Appareil selon la revendication 1, comprenant en outre :
des moyens pour effectuer des mesures de faisceaux candidats au niveau de la couche physique sur la cellule secondaire.

3. Appareil selon l'une quelconque des revendications 1 à 2, dans lequel la transmission d'une ou de plusieurs indications d'un ou de plusieurs autres candidats de cellule secondaire déterminés comprend l'utilisation d'un élément de commande de couche de contrôle d'accès au support pour indiquer des informations sur les nouveaux candidats de cellule secondaire, si de nouveaux candidats peuvent être indiqués.

4. Appareil selon la revendication 3, dans lequel l'élément de commande de couche de contrôle d'accès au support contient des informations sur plusieurs faisceaux candidats.

5. Appareil selon l'une quelconque des revendications 1 à 4, comprenant en outre des moyens pour déterminer (209) si des ressources d'accès aléatoire sans contention correspondant à un ou plusieurs candidats de cellule secondaire sont disponibles avant la transmission (213) d'une ou de plusieurs indications d'un ou de plusieurs autres candidats de cellule secondaire déterminés.

6. Appareil selon la revendication 5, comprenant en outre des moyens pour sélectionner (211) une ou plusieurs des ressources d'accès aléatoire sans contention.

7. Procédé comprenant :
la détermination (201), par un équipement utilisateur, qu'une défaillance de faisceau sur une cellule secondaire a été déterminée par une couche de contrôle d'accès au support ;
la détermination (205) qu'aucun faisceau candidat n'est disponible sur la cellule secondaire et qu'une cellule primaire n'est pas dans un état de défaillance ;
la détermination (207), par l'équipement utilisateur, d'un ou de plusieurs autres candidats de cellule secondaire sur la base d'au moins des mesures de faisceaux candidats d'au moins une cellule desservante ; et
la transmission (213), par l'équipement utilisateur, d'une ou de plusieurs indications d'un ou de plusieurs autres candidats de cellule secondaire déterminés.
